# EUROPEAN PATENT APPLICATION

(11) **EP 4 138 513 A1**
(43) Date of publication of application: **22.02.2023**
(21) Application number: 22189704.4
(22) Date of filing: 10.08.2022
(51) Int. Cl.: H04W 84/12, H04W 60/00, H04W 24/02

(54) **CENTRALIZED BASIC SERVICE SET (BSS) COLOR ASSIGNMENT FOR MESH NETWORK**

(30) Priority: 18.08.2021 IN 202121037410; 29.07.2022 US 202217816095
(71) Applicant: MediaTek Singapore Pte. Ltd., Singapore 138628 (SG)
(72) Inventor: VIG, Prakhar, Noida (IN); SHAKYA, Amit, Noida (IN); ARORA, Sonal, Noida (IN); CHOUDHURY, Saidul Alom, Noida (IN)
(74) Representative: Hoefer & Partner Patentanwälte mbB

(57) **Abstract**

A device (102) and a method of a centralized BSS, basic service set, assignment mechanism in a mesh network are provided. The device includes at least one antenna and a processor. The processor is configured to establish a wireless connection with at least one agent device (104A, 104B) through the at least one antenna. The device forms a mesh network with the agent device. The processor controls the assignment of BSS, basic service set, colors to the device (102) and the agent device (104A, 104B) in the mesh network.

## Description

### CROSS REFERENCE TO RELATED APPLICATIONS

This application claims the benefit of India Provisional Application No. 202121037410, filed on August 18, 2021, the entirety of which is incorporated by reference herein.

### BACKGROUND OF THE INVENTION

### Field of the Invention

The present invention relates to a wireless-communication system, and, in particular, to an apparatus and a method of a centralized BSS (basic service set) color assignment mechanism in a mesh network.

### Description of the Related Art

BSS Coloring is a technique used to improve co-existence of overlapping BSSs (OBSS) and to allow spatial reuse within one channel. Wi-Fi 6 (IEEE 802.11ax) enables each AP radio to assign a value (from 1 to 63), known as the BSS color, to be included in the physical (PHY) header of all high-efficiency (HE) transmissions from devices in its BSS. With devices of each BSS transmitting a locally-unique color, a device can quickly and easily distinguish transmissions from its BSS or from devices in a neighboring BSS.

When multiple IEEE 802.11ax HE devices form a mesh network, each device may choose a color of its own. However, it is possible that two devices in the same mesh network choose the same BSS color, and this will cause BSS-color collision among the devices of the same mesh network. When this situation happens, these devices having collision will disable its BSS color temporarily till a new BSS color is chosen internally. However, the new BSS color chosen by each device having collision can conflict with the BSS colors in the overlapping basic service set (OBSS).

In addition, there are total 64 different BSS colors as per the IEEE 802.11ax specification. If all these BSS colors are used, no remaining BSS color is available. Thus, no matter which BSS color a device chooses, it will have repeated BSS-color collisions. As a result, the overall performance in a mesh network will degrade because BSS coloring plays an important role in the Spatial Reuse (SR) mechanism of the IEEE 802.11ax standard, where the SR mechanism can be used to reduce power consumption and update network allocation vectors (NAV) for an IEEE 802.11ax device.

### BRIEF SUMMARY OF THE INVENTION

Devices according to the invention are defined by each one of the independent claims 1 and 14. A method according to the invention is defined by claim 7. An embodiment of the present invention provides a device. The device includes at least one antenna and a processor. The processor is configured to establish a wireless connection with at least one agent device through the at least one antenna, and the device and the at least one agent device forms a mesh network. The processor controls assignment of BSS (basic service set) colors to the device and the at least one agent device in the mesh network.

Preferably, the processor maintains a BSS-color database that records a universal free-color list and a per-device free-color list for each of the device and the agent device in the mesh network. The universal free-color list records a first exclusive set of BSS colors that are free for use by all devices in the mesh network, and the per-device free-color list records a second exclusive set of BSS colors that are free for use by the device or the agent device in the mesh network.

Preferably, when a particular agent device joins the mesh network, the particular agent device remains uncolored until the device assigns a particular BSS color to the particular agent device according to the universal free-color list. Before the device assigns the particular BSS color to the particular agent device, the particular agent device sends a Wi-Fi AP 6 capability TLV (type-length-value) to the device, wherein upon receiving the TLV from the particular agent device, the device sends a channel-scan request to ask the particular agent device to perform a channel scan on a designated Wi-Fi channel currently operated by the mesh network.

Preferably, after performing the channel scan, the particular agent device sends a channel-scan report to the device to indicate the BSS colors that are being used by other agent devices in the mesh network and the OBSS (overlapping basic service set). The device updates the universal free-color list in the BSS-color database according to the channel-scan report from the particular agent device. When there is at least one available BSS color in the universal free-color list, the device selects, using a predetermined BSS-color selection algorithm, one of the available BSS colors in the universal free-color list as the particular BSS color to be assigned to the particular agent device.

Preferably, the device sends a channel-selection request with a spatial-reuse request TLV that includes the particular BSS color to the particular agent device, and the particular agent device uses the particular BSS color and establish the wireless connection with the device on the designated Wi-Fi channel indicated in the channel-selection request.

Preferably, after the particular agent has successfully established the wireless connection and has used the particular BSS color, the particular agent device sends an operating-channel report with a spatial-reuse request TLV to the device to indicate that the particular BSS color is being used by the particular agent device. Upon receiving the operating-channel report from the particular agent device, the device updates the universal free-color list in the BSS-color database by excluding the particular BSS color.

Preferably, when there are no available BSS colors in the universal free-color list, the device checks the per-device free-color list of the particular agent device to determine whether to use a BSS-color-reuse technique. When the device determines that a first BSS color is available in the per-device free-color list of the particular agent device but it is not in the universal free-color list, the device compares an RSSI (received signal strength indication) of a beacon of the particular agent device with a preset color-reuse threshold, when the RSSI of the beacon of the particular agent device is lower than the preset color-reuse threshold, the device reuses the first BSS color as the particular BSS color to be assigned to the particular agent device.

An embodiment of the present invention provides a method. The method includes the following steps: establishing a wireless connection between a device and at least one agent device, wherein the device and the at least one agent device forms a mesh network; and controlling, by the device, assignment of BSS (basic service set) colors to the device and the at least one agent device in the mesh network by the device.

An embodiment of the present invention provides a device. The device includes at least one antenna and a processor. The processor is configured to establish a wireless connection with at least one agent device through the at least one antenna, and the device and the at least one agent device forms a mesh network. In response to a basic-service-set-color (BSS-color) collision between a particular agent device and an access point which is not a part of the mesh network being detected, the processor assigns a particular BSS color to the particular agent device, wherein the access point can be HE (High Efficiency) access point.

### BRIEF DESCRIPTION OF THE DRAWINGS

The present invention can be more fully understood by reading the subsequent detailed description and examples with references made to the accompanying drawings, wherein:
FIG. 1A is a diagram of a mesh network in accordance with an embodiment of the invention;
FIG. 1B is a block diagram of the controller device in accordance with an embodiment of the invention;
FIG. 2 is a diagram of a mesh network with BSS-color collision in accordance with an embodiment of the invention;
FIG. 3 is a diagram of the mesh network in a sparse deployment scenario in accordance with an embodiment of the invention;
FIG. 4 is a flow diagram of the centralized BSS-color assignment mechanism in accordance with an embodiment of the invention;
FIG. 5 is another flow diagram of the centralized BSS-color assignment mechanism in accordance with the embodiment of FIG. 4; and
FIG. 6 is a diagram of the centralized BSS-color assignment mechanism in accordance with the embodiment of FIG. 5.

### DETAILED DESCRIPTION OF THE INVENTION

The following description is made for the purpose of illustrating the general principles of the invention and should not be taken in a limiting sense. The scope of the invention is best determined by reference to the appended claims.

The following description is presented to enable one of ordinary skill in the art to make and use the invention, and is provided in the context of a patent application and its requirements. Various modifications to the embodiments and the generic principles and features described herein will be readily apparent to those skilled in the art. Thus, the present invention is not intended to be limited to the embodiments shown, but is to be accorded the widest scope consistent with the principles and features described herein.

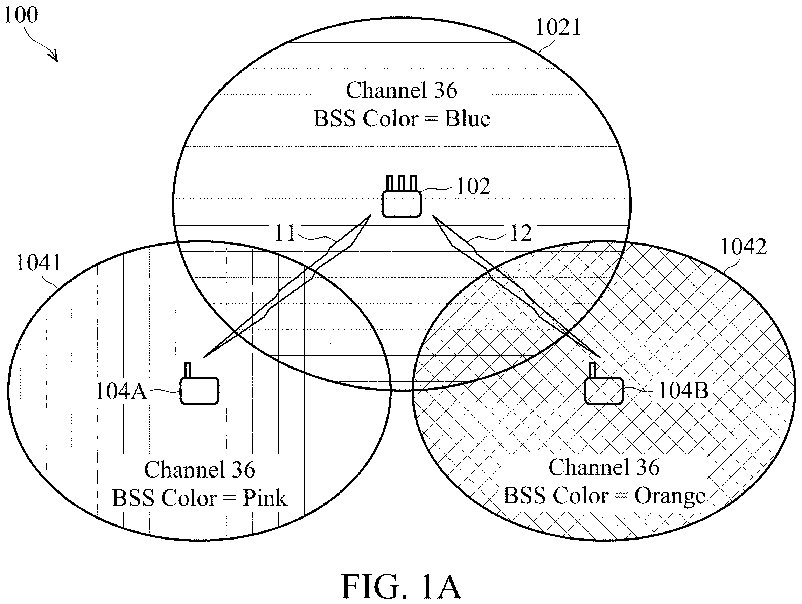

FIG. 1A is a diagram of a mesh network in accordance with an embodiment of the invention.

The mesh network 100 may include a controller device 102 and one or more agent devices 104A and 104B, wherein the agent devices 104A and 104B may be all or part of the agent devices that are located within the range of the controller device 102. In addition, the controller device 102 and the agent devices 104A and 104B may be mesh nodes in the mesh network 100. In an embodiment, the controller device 102 and the agent devices 104A and 104B may include wireless routers, access points, laptops, desktop computers, smartphones, tablet PCs, etc. Although FIG. 1A shows one controller device 102 and two agent devices 104A and 104B, one of ordinary skill in the art will readily recognize that there could be any number of agent devices, and such numbers would be within the spirit and scope of the invention.

More specifically, a mesh network allows nodes or access points (e.g., controller device 102 and agent devices 104A and 104B to communicate directly with other nodes without being routed through a central switch point, e.g., a hub. In some embodiments, the controller device 102 and the agent devices 104A and 104B maintain the mesh network 100 by associating and authenticating new agent devices such as stations (STA), and by coordinating transmissions based on time and bandwidth requests by the agent devices 104A and 104B. In addition, the controller device 102 may manage the task of allocating the BSS color to each of its agent devices 104A and 104B in a centralized manner in order to remove the possibility of BSS-color collision between the devices in the mesh network 100, and the details will be described later.

As depicted in FIG. 1A, it is assumed that the controller device 102 and agent devices 104 in the mesh network 100 supports IEEE 802.11ax (Wi-Fi 6) standard, and the agent devices 104A and 104B are connected to the controller device 102 by Wi-Fi links 11 and 12, respectively. In addition, Wi-Fi channel 36 is used by the controller device 102 and agent devices 104A and 104B which have a corresponding range 1021, 1041, and 1042, respectively. In the scenario of FIG. 1A, the controller device 102 may choose the BSS color of Blue, and the agent devices 104A and 104B may respectively choose the BSS colors of Pink and Orange, where no BSS-color collision occurs in FIG. 1A.

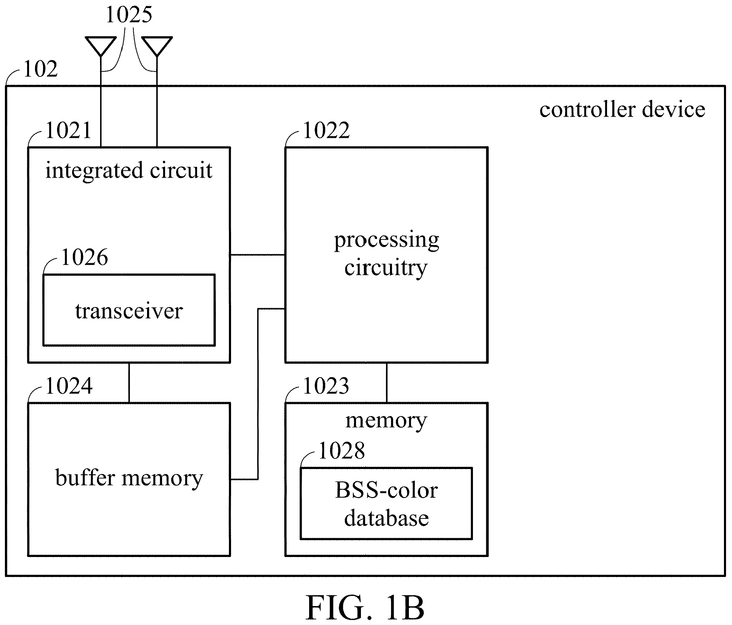

FIG. 1B is a block diagram of the controller device in accordance with an embodiment of the invention.

The controller device 102 may include an integrated circuit 1021, processing circuitry 1022, a memory 1023, a buffer memory 1024, and at least one antenna 1025. The antennas 1025 may transmit and receive radio frequency (RF) signals. The integrated circuit 1021 is coupled to the antennas 1025, and the integrated circuit 1021 may include one or more transceivers 1026 which may receive RF signal from the antennas 1025, convert them to baseband signals, and send the baseband signals to the processing circuitry 1022. The transceivers 1026 may also convert the baseband signals from the processing circuitry 1022, convert them to RF signal, and send out the RF signals to antennas 1025. In some embodiments, the integrated circuit 1021 may support functions of SU-MIMO (single-user multi-input multi-output) and MU-MIMO (multi-user multi-input multi-output), but the disclosure is not limited thereto. In some embodiments, the processing circuitry 1022 may be implemented by a central processing unit (CPU), a general-purpose processor, a digital signal processor (DSP), or a microcontroller, but the disclosure is not limited thereto.

In some embodiments, the integrated circuit 1021 may be a Wi-Fi chip, and the integrated circuit 1021 and the processing circuitry 1022 may be implemented by a system-on-chip (SoC), but the disclosure is not limited thereto. The memory 1023 may be a volatile memory or a non-volatile memory. For example, the volatile memory may be a static random access memory (SRAM) or a dynamic random access memory (DRAM), and the non-volatile memory may be a flash memory, a read-only memory (ROM), an erasable programmable read-only memory (EPROM), or an electrically erasable programmable read-only memory (EEPROM), but the disclosure is not limited thereto. In addition, the memory 1023 may store instructions or firmware that can be executed by the processing circuitry 1022 to control operations of the controller device 102. In some embodiments, components in the agent devices 104A and 104B may be similar to those in the controller device 102, and the details will not be repeated here.

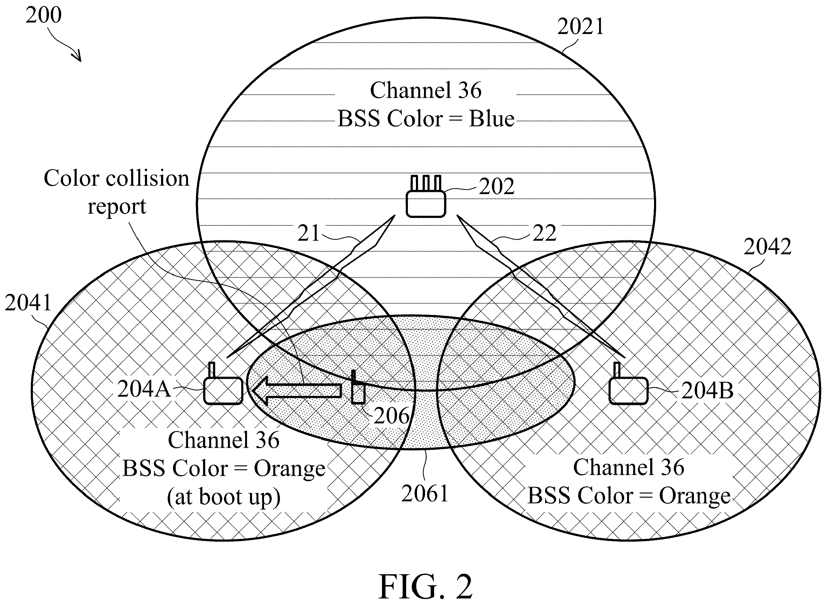

FIG. 2 is a diagram of a mesh network with BSS-color collision in accordance with an embodiment of the invention.

In another scenario, a mesh network 200 is formed by a controller device 202 and agent devices 204A and 204B, where the centralized BSS-color assignment mechanism is not deployed in the mesh network 200. The agent device 204A may select the BSS color by itself upon booting up, such as Orange. When station 206, which is a non-AP HE (High Efficiency) station and has a corresponding range 2061, is connected to the agent device 204A, station 206 can detect that two different ranges 2041 and 2042 have the same BSS color because range 2061 overlaps with range 2041 of the agent device 204A and with range 2042 of the agent device 204B. Accordingly, station 206 can determine that a BSS-color collision occurs where the BSS color (i.e., Orange) of the agent device 204A is the same with that of the agent device 204B.

Attention is now directed to FIG. 1A and FIG. 1B, in order to solve the aforementioned problem, a centralized BSS-color assignment mechanism is used by the controller device 102 and agent devices 104A and 104B in the mesh network 100. For example, the controller device 102 may maintain a BSS-color database 1028 that records the BSS colors used by its surrounding devices (i.e., including the agent devices in the mesh network 100 and other devices in the OBSS), where the BSS-color database 1028 may be stored in the memory 1023 of the controller device 102. Thus, the controller device 102 may allot the appropriate BSS color which is available (i.e., unused) or can be reused to its agent device (i.e., including agent devices 104A and 104B) according to the BSS-color database 1028.

To build the BSS-color database 1028, the controller device 102 may request every agent device in the mesh network 100 to perform a scan on the same channel (e.g., channel 36 as shown in FIG. 1A), and to inform the controller device 102 about the BSS colors used by itself and its neighboring devices (i.e., including the devices in the mesh network 100 and other devices in the OBSS). When each agent device in the mesh network 100 is booted up, it will wait for the controller device 102 to assign a particular BSS color to it.

Specifically, the BSS-color assignment in the mesh network 100 is managed by the controller device 102, and the controller device 102 may assign one of the unused (i.e., available) BSS colors in the BSS-color database 1028 to the agent device being booted up when there are still unused BSS colors in the BSS-color database 1028. If there are no unused BSS colors in the BSS-color database 1028, the controller device 102 may evaluate whether any BSS color in the BSS-color database 1028 can be reused and assigned to the agent device which has detected BSS-color collision, and the details will be described later. In addition, the agent devices 104A and 104B in the mesh network 100 may periodically update the BSS-color information to the controller device 102 if any new BSS color has been found on the same Wi-Fi channel, and this will help the controller device 102 to maintain the BSS-color database 1028 up to date.

For example, the controller device 102 may maintain two lists in the BSS-color database 1028, namely, a universal free-color list and a per-device free-color list for each device in the mesh network 100. For example, after considering the BSS-color information from all agent devices in the mesh network 100, the controller device 102 may build the universal free-color list which may include the exclusive set of BSS colors that are free for use by devices in the mesh network 100.

The per-device free-color list may include the exclusive set of BSS colors that are free for use by one of the agent devices and the controller device 102 in the mesh network 100. The per-device free-color list may include all BSS colors present in the universal free-color list, and may include more BSS colors depending on the location of the particular agent device and neighboring devices visible to the particular agent device. The per-device free-color list of a device comprises at least one BSS color which belongs to the overall BSS-color set and is not used by the neighboring device visible to the device. For example, if the controller device 102 is referred to as Controller, the agent devices 104A is referred to as Agent2, the agent device 104B is referred to as Agent1, the per-device free-color lists for these devices can be regarded as the *Controller_free_color_list, Agent1_free_color_list*, and *Agent2_free_color_list*, respectively.

The BSS-color allocation scheme performed by the controller device 102 can be done depending on the different cases, such as (1) sparse deployment scenario and (2) dense/very dense deployment scenario.

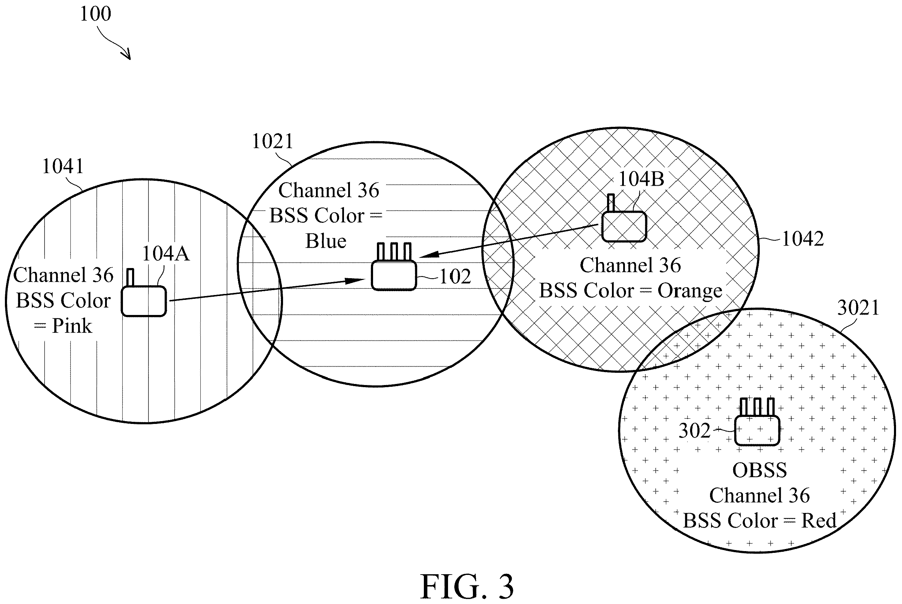

FIG. 3 is a diagram of the mesh network in a sparse deployment scenario in accordance with an embodiment of the invention. Please refer to FIGs. 1A-1B and FIG. 3.

Although there are 64 BSS colors defined in the IEEE 802.11ax (Wi-Fi 6) specification, for ease of description, it is assumed that 6 BSS colors in total (i.e., the overall BSS-color set) can be used by the controller device 102, such as Blue, Orange, Pink, Red, Yellow, and Grey. When the controller device 102 and agent devices 104A and 104B are booted up, they can scan the BSS colors used in a particular Wi-Fi channel (e.g., channel 36) within their respective range 1021, 1041, and 1042. Since a sparse deployment scenario is used in FIG. 3, there are a few BSS colors being used in the mesh network 100 and the OBSS.

As depicted in FIG. 3, because there are sufficient BSS colors free to use, the controller device 102 may assign BSS colors of Blue, Pink, and Orange to itself and the agent devices 104A and 104B, respectively. In addition, since the range 1042 of the agent device 104B overlaps with the range 3021 of the AP 302 of the OBSS, the agent device 104B may detect that the BSS color of Red is being used by the AP 302 of the OBSS, and the BSS-color information reported by the agent device 104B to the controller device 102 may include the BSS colors of Orange and Red. Thus, the universal free-color list maintained by the controller device 102 may include the BSS colors of Yellow and Grey that are not used by the devices in the mesh network 100 and the OBSS.

Because the BSS colors of Blue, Orange, and Pink are used in the mesh network 100, the controller device 102 may update the universal free-color list and per-device free-color lists in the BSS-color database 1028. For example, the per-device free-color list *Controller_free_color_list* of the controller device 102 may include the BSS colors of Blue, Red, Yellow, and Grey, where the BSS color of Blue is assigned to the controller device 102 by itself, and the BSS colors of Orange and Pink are excluded from the *Controller_free_color_list.*

The per-device free-color list *Agent1_free_color_list* of the agent device 104B (i.e., Agent1) may include the BSS colors of Orange, Pink, Yellow, and Grey, where the BSS color of Pink is assigned to the agent device 104B, and the BSS colors of Blue and Red are excluded from *Agent1_free_color_list* since the BSS color of Red is being used by the OBSS and Blue is being used by controller. It should be noted that the BSS color of Pink is not excluded in the per-device free-color list *Agent1_free*_*color_list* of the agent device 104B because the range 1042 of the agent device 104B does not overlap with the range 1041 of the agent device 104A.

The per-device free-color list *Agent2_free_color_list* of the agent device 104A may include the BSS colors of Orange, Pink, Red, Yellow, and Grey, where the BSS color of Pink is assigned to the agent device 104A, and the BSS color of Blue is excluded from the *Agent2_free*_*color_list.* It should be noted that the BSS colors of Orange and Red are not excluded in the per-device free-color list *Agent2_free_color_list* of the agent device 104A because the range 1041 of the agent device 104A does not overlap with the range 1042 of the agent device 104B and the range 3021 of the OBSS.

Specifically, since there is a very limited number of devices in the mesh network 100 in the sparse deployment scenario shown in FIG. 3, there is at least one universal free BSS color in the universal free-color list. Thus, if a particular agent device is being booted up or wants to join the mesh network 100, the controller device 102 may select an available (i.e., free to use) BSS color in the universal free-color list, and assign the selected available BSS color to the particular agent device. The particular agent device will not use any BSS color until the controller device 102 has assigned a BSS color to the particular agent device. Accordingly, BSS-color collision can be prevented since the controller device 102 can take an informed decision using the universal free-color list in the BSS-color database 1028.

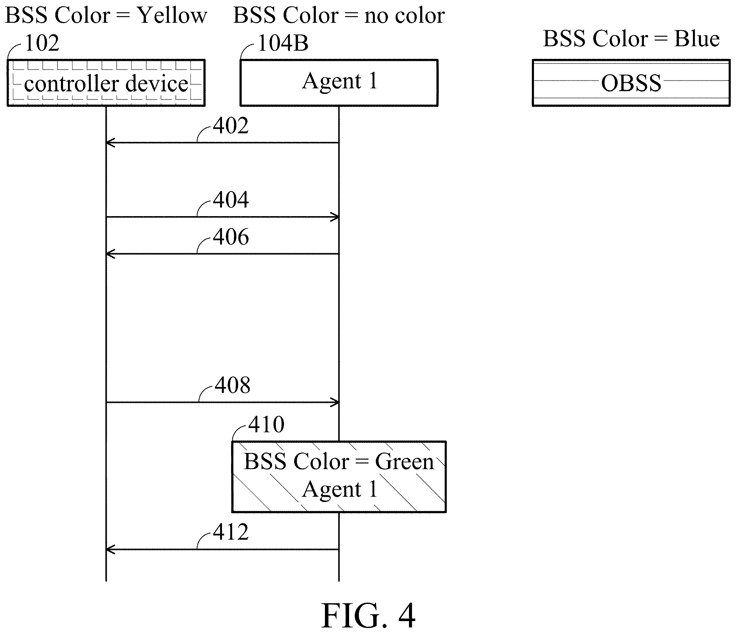

FIG. 4 is a flow diagram of the centralized BSS-color assignment mechanism in accordance with an embodiment of the invention. Please refer to FIGs. 1A-1B and FIG. 4.

In an embodiment, for ease of description, it is assumed that 6 BSS colors in total (i.e., the overall BSS-color set) can be used by the controller device 102, such as Blue, Grey, Pink, Red, Yellow, and Green. In addition, it is also assumed that the controller device 102 exists in the mesh network 100 in the beginning, and the controller device 102 has assigned the BSS color of Yellow to itself. Thus, the BSS color of Yellow is excluded from the universal free-color list in the BSS-color database 1028.

When the agent device 104B (i.e., Agent 1) wants to join the mesh network 100, the agent device 104B may send a Wi-Fi 6 AP capability TLV (i.e., type-length-value) to the controller device 102 (step 402) to indicate that the agent device 104B supports the function of "spatial reuse". Upon receiving the TLV from the agent device 104B, the controller device 102 may send a channel-scan request to the agent device 104B (step 404) to ask the agent device 104B to perform a channel scan on a designated Wi-Fi channel (i.e., the currently operating Wi-Fi channel of the mesh network 100).

After performing the channel scan, the agent device 104B still remains uncolored, and the agent device 104B may detect that the BSS color of Blue is being used by the OBSS. Then, the agent device 104B may send a channel-scan report to the controller device 102 (step 406) to indicate that the BSS color of Blue is used. Accordingly, the controller device 102 may further exclude the BSS color of Blue from the universal free-color list in the BSS-color database 1028 in addition to the BSS color of Yellow. Meanwhile, the controller device 102 may update the BSS-color database 1028 which include available BSS colors of Grey, Pink, Red, and Green. Then, the controller device 102 may perform a predetermined BSS-color selection algorithm to select one of the available BSS colors for the agent device 104B, such as Green.

The controller device 102 may send a channel-selection request with a spatial-reuse request TLV to the agent device 104B (step 408), where the assigned BSS color of the agent device 104B is Green. Thus, the agent device 104B may use the BSS color of Green as its BSS color (step 410), and establish the Wi-Fi link between the agent device 104B and the controller device 102 according to the designated Wi-Fi channel indicated in the channel-selection request. Then, after the agent device 104B has successfully established the Wi-Fi link and has used the designated BSS color, the agent device 104B may send an operating-channel report with a spatial-reuse report TLV to the controller device 102 (step 412) to indicate that the BSS color of Green is being used by the agent device 104B.

Upon receiving the operating-channel report from the agent device 104B, the controller device 102 may update the BSS-color database 1028 by excluding the BSS color of Green in addition to the BSS colors Yellow and Blue. Meanwhile, the universal free-color list maintained by the controller device 102 may include the BSS colors of Grey, Pink, and Red.

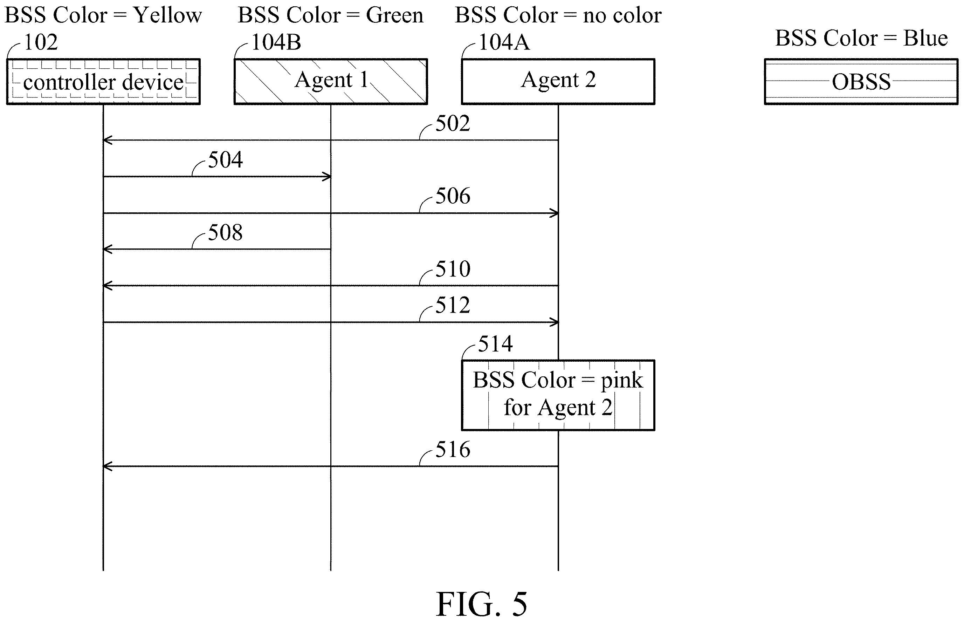

FIG. 5 is another flow diagram of the centralized BSS-color assignment mechanism in accordance with the embodiment of FIG. 4. Please refer to FIGs. 1, 4, and 5.

The scenario of FIG. 5 follows the embodiment of FIG. 4. For example, the Wi-Fi link between the agent device 104B and the controller device 102 has been established, and the controller device 102 and the agent device 104B has their own BSS colors such as Yellow and Green, respectively. Meanwhile, the universal free-color list in the BSS-color database 1028 may include the BSS colors of Grey, Pink, and Red.

When the agent device 104A (i.e., Agent 2) without any BSS color wants to join the mesh network 100, the agent device 104A may send a Wi-Fi 6 AP capability TLV (i.e., type-length-value) to the controller device 102 (step 502) to indicate that the agent device 104A supports the function of "spatial reuse". Upon receiving the TLV from the agent device 104A, the controller device 102 may send a channel-scan request to the agent devices 104A and 104B (steps 504 and 506) to ask the agent devices 104A and 104B to perform a channel scan on a designated Wi-Fi channel.

After performing the channel scan, the agent device 104B may detect that the BSS color of Blue is being used by the OBSS, and then send a channel-scan report to the controller device 102 (step 508) to indicate that the BSS color of Blue is used. In addition, after performing the channel scan, the agent device 104A still remains uncolored, and the agent device 104A may detect that the BSS color of Green is being used by the agent device 104B and the BSS color of Blue is being used by the OBSS. Then, the agent device 104A may send another channel-scan report to the controller device 102 (step 510) to indicate that the BSS colors of Green and Blue are used. Accordingly, the controller device 102 may exclude the BSS colors of Green and Blue from the universal free-color list in the BSS-color database 1028 in addition to the BSS color of Yellow. Meanwhile, the controller device 102 may update the BSS-color database 1028 which include available BSS colors of Grey, Pink, and Red. Then, the controller device 102 may perform the predetermined BSS-color selection algorithm to select one of the available BSS colors for the agent device 104A, such as Pink.

The controller device 102 may send a channel-selection request with a spatial-reuse request TLV to the agent device 104A (step 512), where the assigned BSS color of the agent device 104A is Pink. Thus, the agent device 104A may use the BSS color of Pink as its BSS color (step 514), and establish the Wi-Fi link between the agent device 104A and the controller device 102 according to the designated Wi-Fi channel indicated in the channel-selection request. Then, after the agent device 104A has successfully established the Wi-Fi link and has used the designated BSS color, the agent device 104A may send an operating-channel report with a spatial-reuse report TLV to the controller device 102 (step 516) to indicate that the BSS color of Pink is being used by the agent device 104 A.

Upon receiving the operating-channel report from the agent device 104A, the controller device 102 may update the BSS-color database 1028 by excluding the BSS color of Pink in addition to the BSS colors Yellow, Green, and Blue. Meanwhile, the universal free-color list maintained by the controller device 102 may include the BSS colors of Grey and Red.

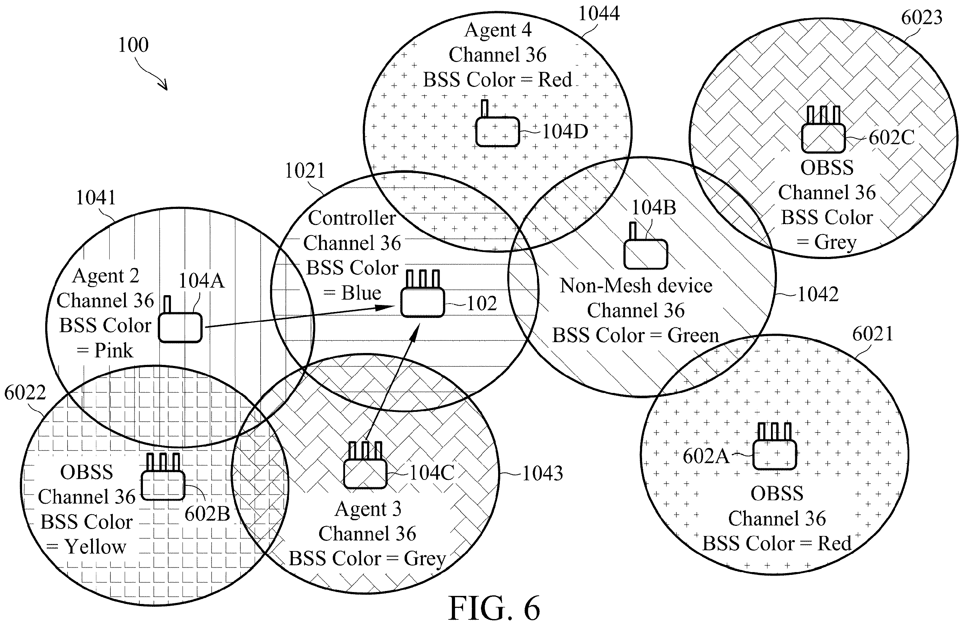

FIG. 6 is a diagram of the centralized BSS-color assignment mechanism. Please refer to FIGs. 1 and 6. In this embodiment, it is assumed that 6 BSS colors in total (i.e., the overall BSS-color set) can be used by the controller device 102, such as Blue, Grey, Pink, Red, Yellow, and Green.

In FIG. 6, For example, the Wi-Fi link between each of the agent devices 104A to 104C and the controller device 102 has been established, and the controller device 102 and the agent devices 104A to 104C have their own BSS colors such as Blue, Green, Pink, and Grey, respectively. Meanwhile, the universal free-color list in the BSS-color database 1028 may include the BSS colors of yellow and Red, and it is assumed that the controller device 102 has assigned the BSS colors of Green, Pink, Grey to the agent devices 104A, 104B, and 104C, respectively.

In continuation with the embodiment of FIG. 6, if any of the agent devices (e.g., agent device 104B) is disconnected from the controller device 102 and the disconnected agent device is still operating independently (e.g., Agent 1 as a non-mesh device), the controller device 102 will not be able to send a channel-scan request to the non-mesh device to scan for its usage. In addition, the controller device 102 will not build the per-device free-color list for the agent device 104B (i.e., Agent 1), and thus the per-device free-color list *Agent1_free_color_list* is not valid.

Since the agent devices 104A and 104C (i.e., Agent 2 and Agent 3) are operating as mesh devices in the mesh network 100, the controller device 102 is able to send a channel-scan request to the agent devices 104A and 104C. As depicted in FIG. 6, since the range 6022 of the AP 602B in OBSS, which has the BSS color of Yellow, overlaps with the ranges 1041 and 1043 of the agent devices 104A and 104C, the agent devices 104A and 104C may detect that the BSS color of Yellow is used by the OBSS. Thus, after performing a channel scan, the agent device 104A may report the BSS-color information including the BSS colors of Pink, Yellow, and Grey to the controller device 102. Similarly, the agent device 104C may also report the BSS-color information including the BSS colors of Pink, Yellow, and Grey to the controller device 102. Therefore, the controller device 102 may exclude yellow from the universal free-color list in the BSS-color database 1028.

In addition, because the BSS colors of Green and Red being used by other agent device and the OBSS are not visible to the agent devices 104A and 104C, the per-device free-color list *Agent2_free*_*color_list* for the agent device 104A may include the BSS colors of Green, Pink, and Red, and the per-device free-color list *Agent3_free_color_list* for the agent device 104C may include the BSS colors of Green, Red, and Grey. Meanwhile, the per-device free-color list *controller_free_color_list* for the controller device 102 may include the BSS colors of Blue, Yellow, and Red. It should be noted that the controller device 102 is not able to obtain information about the BSS colors of the APs 602A and 602C since the agent device 104B is not a mesh device capable of scanning beacons of the APs in the OBSS in this embodiment. However, the non-mesh device, i.e., the agent device 104B, still has an overlapping OBSS with the controller device 102, and thus the controller device 102 can detect that the BSS color of Green is used by the non-mesh device. Accordingly, the controller device 120 may exclude the BSS color of Green from the universal free-color list, and the universal free-color list may include one BSS color which is Red.

When a new agent device (i.e., agent device 104D as Agent 4) wants to join the mesh network 100, the controller device 102 may select the one available BSS color from the universal free-color list, namely, Red, and assign the BSS color of Red to the agent device 104D. It should be noted that the range 1044 of the agent device 104D does not overlap with the range 6021 of the AP 602A in the OBSS, the agent device 104D is not able to scan the AP 602A in the OBSS. Thus, the BSS color of Red is still free for use for the agent device 104D.

In addition, if the agent device 104B (i.e., a non-mesh device) is turned off, the controller device 102 may detect that the BSS color of Green is not in use by periodically scanning the designated Wi-Fi channel (i.e., channel 36). In this situation, the controller device 120 is still not able to obtain information about the BSS colors of Red and Grey being used by the APs 602A and 602C in the OBSS, and thus controller device 120 may update the BSS-color database 1028 by adding the BSS color of Green into the universal free-color list.

In another embodiment, if the mesh network 100 is in a very dense deployment scenario, there may be no available BSS color in the universal free-color list, but there may be at least one available BSS color in the per-device free-color list. Specifically, although there are 64 BSS colors in total provided by the IEEE 802.11ax standard, this number of BSS colors is very less when a dense or very dense deployment scenario is considered since it is possible that 64 BSS colors are in use by the devices in the mesh network and the OBSS. This indirectly means that the available BSS color in the universal free-color list is none.

If there are no available BSS colors in the universal free-color list, the controller device 102 may check the corresponding per-device free-color list for each agent device to determine whether a BSS-color-reuse technique can be used. For example, the controller device 102 may set a color-reuse threshold which defines the RSSI (receive signal strength indication) at which the impact of BSS-color collision can be ignored (e.g., - 78 dBm or greater), and the color-reuse threshold is user-configurable.

Specifically, if any BSS color is available in the per-device free-color list of a particular agent device but not in the universal free-color list, it means that this BSS color is being used by some other device in the mesh network 100 or the OBSS. Thus, the controller device 102 may compare the RSSI of the beacon of the particular agent device with the color-reuse threshold. If the RSSI of the beacon of the particular agent device is lower than the threshold, it indicates that the signal strength of other agent devices in the mesh network 100 or the OBSS is weak enough, and thus the controller device 102 may reuse the BSS color, which is available in the per-device free-color list of the particular agent device but not in the universal free-color list, for the particular agent device. It should be noted that since the RSSI of the beacon of the particular agent device is below the color-reuse threshold, it indicates that the BSS-color collision of a certain BSS color on the particular agent device is not considered valid, and thus the controller device 102 can reuse the certain BSS color in this case.

In addition, the controller device 102 may periodically send a channel-scan request to each agent device (i.e., mesh device) to ask each agent device to perform a channel scan on the designated Wi-Fi channel, and to report the BSS-color information of each agent device. Accordingly, the controller device 102 may keep monitoring whether any free BSS color is found in the universal free-color list by updating the BSS-color database 1028. If any free BSS color is newly found in the universal free-color list, the controller device 102 may assign this BSS color to the new agent device.

In the embodiments of FIG. 3 and FIG. 6, the controller device 102 may monitor whether any BSS-color collision happens at any of the agent devices in run time. If the controller device 102 determines that BSS-color collision happens at a particular agent device, the controller device 102 may send a channel-scan request to all devices (i.e., including the controller device 102 and the agent devices) in the mesh network 100 to perform a channel scan on the currently-operating channel. Thus, each device in the mesh network 100 may report the scanned BSS-color information of its neighbors to the controller device 102 using the MAP (Mesh Access Point) channel-scan report frame which contains the channel-scan TLV (MAP R4). This channel-scan TLV may contain the BSS-color information of each neighbor of each device in the mesh network 100.

In addition, the scanned BSS-color information from each device in the mesh network 100 may be synchronized periodically by the controller device 102, so that the BSS-color database 1028 can be updated. When a new agent device joins the mesh network 100, the controller device 102 may determine which BSS color to be assigned to the new agent device according to the BSS-color database 1028. In addition, for non-MAP case (e.g., repeater network), proprietary information can be added to the neighbor report to represent the neighbor's BSS color.

Referring to the embodiments of FIG. 4 and FIG. 5, the controller device 102 may send a channel-selection request with one or more spatial-reuse request TLV that contains the BSS color for use by the particular agent device which supports IEEE 802.11 High-Efficiency capability. After the particular agent device has used the designated BSS color in the channel-selection request, the particular agent device may send an operating-channel report message with one spatial-reuse report TLV for each radio that supports the IEEE 802.11 High Efficiency capability. Thus, the controller device 102 may know that the particular agent device has honored the controller's request, and also update the BSS-color database 1028 accordingly.

Embodiments described herein can take the form of an entirely hardware implementation, an entirely software implementation, or an implementation containing both hardware and software elements. Embodiments may be implemented in software, which includes, but is not limited to, application software, firmware, resident software, microcode, etc.

The steps described herein may be implemented using any suitable controller or processor, and software application, which may be stored on any suitable storage location or computer-readable medium. The software application provides instructions that enable the processor to cause the receiver to perform the functions described herein.

Furthermore, embodiments may take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

The medium may be an electronic, magnetic, optical, electromagnetic, infrared, semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk-read/write (CD-R/W).

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A device (102), comprising:
at least one antenna (1025); and
a processor (1022), configured to establish a wireless connection with at least one agent device (104A, 104B) through the at least one antenna (1025), wherein the device (102) and the at least one agent device (104A, 104B) form a mesh network;
wherein the processor (1022) controls assignment of BSS, basic service set, colors to the device (102) and the at least one agent device (104A, 104B) in the mesh network.

2. The device (102) as claimed in claim 1, wherein the processor (1022) maintains a BSS-color database that records a universal free-color list and a per-device free-color list for each of the device (102) and the at least one agent device (104A, 104B) in the mesh network,
wherein the universal free-color list records a first exclusive set of BSS colors that are free for use by all devices in the mesh network, and the per-device free-color list records a second exclusive set of BSS colors that are free for use by the device (102) or the at least one agent device (104A, 104B) in the mesh network,
wherein when a particular agent device joins the mesh network, the particular agent device remains uncolored until the device assigns a particular BSS color to the particular agent device according to the universal free-color list.

3. The device (102) as claimed in claim 2, wherein before the device (102) assigns the particular BSS color to the particular agent device, the device receives Wi-Fi AP 6 capability TLV, type-length-value, from the particular agent device,
wherein upon receiving the TLV from the particular agent device, the device (102) sends a channel-scan request to ask the particular agent device to perform a channel scan on a designated Wi-Fi channel currently operated by the mesh network, wherein the device receives a channel-scan report from the particular agent device to indicate the BSS colors that are being used by other agent devices in the mesh network and the OBSS, overlapping basic service set, the channel-scan report is sent by the particular agent device after performing the channel scan;
wherein the device updates the universal free-color list in the BSS-color database according to the channel-scan report from the particular agent device.

4. The device (102) as claimed in any one of claims 2 and 3, wherein when there is at least one available BSS color in the universal free-color list, the device (102) selects, using a predetermined BSS-color selection algorithm, one of available BSS colors in the universal free-color list as the particular BSS color to be assigned to the particular agent device,
wherein the device (102) sends a channel-selection request with a spatial-reuse request TLV that includes the particular BSS color to the particular agent device such that the particular agent device uses the particular BSS color and establishes the wireless connection with the device (102) on the designated Wi-Fi channel indicated in the channel-selection request.

5. The device (102) as claimed in any one of claim 2 to 4, wherein the device (102) receives an operating-channel report with a spatial-reuse report TLV sent by the particular agent device to indicate that the particular BSS color is being used by the particular agent device, wherein the operating-channel report is sent by the particular agent device after the particular agent has successfully established the wireless connection and has used the particular BSS color;
wherein upon receiving the operating-channel report from the particular agent device, the device (102) updates the universal free-color list in the BSS-color database by excluding the particular BSS color.

6. The device (102) as claimed in any one of claims 2 to 5, wherein when there are no available BSS colors in the universal free-color list, the device (102) checks the per-device free-color list of the particular agent device to determine whether to use a BSS-color-reuse technique,
wherein when the device (102) determines that a first BSS color is available in the per-device free-color list of the particular agent device but the first BSS color is not in the universal free-color list, the device (102) compares an RSSI, received signal strength indication, of a beacon of the particular agent device with a preset color-reuse threshold,
when the RSSI of the beacon of the particular agent device is lower than the preset color-reuse threshold, the device (102) reuses the first BSS color as the particular BSS color to be assigned to the particular agent device.

7. A method, comprising:
establishing a wireless connection between a device and at least one agent device, wherein the device and the at least one agent device form a mesh network; and
controlling, by the device, assignment of BSS, basic service set, colors to the device and the at least one agent device in the mesh network.

8. The method as claimed in claim 7, wherein the device maintains a BSS-color database that records a universal free-color list and a per-device free-color list for each of the device and the at least one agent device in the mesh network,
wherein the universal free-color list records a first exclusive set of BSS colors that are free for use by all devices in the mesh network, and the per-device free-color list records a second exclusive set of BSS colors that are free for use by the device or the at least one agent device in the mesh network,
wherein when a particular agent device joins the mesh network, the particular agent device remains uncolored until the device assigns a particular BSS color to the particular agent device according to the universal free-color list.

9. The method as claimed in claim 8, further comprising:
before assigning the particular BSS color to the particular agent device, utilizing the particular agent device to send a Wi-Fi AP 6 capability TLV, type-length-value, to the device;
upon receiving the TLV from the particular agent device, utilizing the device to send a channel-scan request to ask the particular agent device to perform a channel scan on a designated Wi-Fi channel currently operated by the mesh network;
after performing the channel scan, utilizing the particular agent device to send a channel-scan report to the device to indicate the BSS colors that are being used by other agent devices in the mesh network and the OBSS, overlapping basic service set; and
utilizing the device to update the universal free-color list in the BSS-color database according to the channel-scan report from the particular agent device.

10. The method as claimed in any one of claims 8 and 9, further comprising:
when there is at least one available BSS color in the universal free-color list, utilizing the device to select, using a predetermined BSS-color selection algorithm, one of the available BSS colors in the universal free-color list as the particular BSS color to be assigned to the particular agent device.

11. The method as claimed in any one of claims 8 to10, further comprising:
utilizing the device to send a channel-selection request with a spatial-reuse request TLV that includes the particular BSS color to the particular agent device; and
utilizing the particular agent device to use the particular BSS color and to establish the wireless connection with the device on the designated Wi-Fi channel indicated in the channel-selection request.

12. The method as claimed in any one of claims 8 to11, further comprising:
after the particular agent has successfully established the wireless connection and has used the particular BSS color, utilizing the particular agent device to send an operating-channel report with a spatial-reuse request TLV to the device to indicate that the particular BSS color is being used by the particular agent device; and
upon receiving the operating-channel report from the particular agent device, utilizing the device to update the universal free-color list in the BSS-color database by excluding the particular BSS color.

13. The method as claimed in any one of claims 8 to12, further comprising:
when there are no available BSS colors in the universal free-color list, utilizing the device to check the per-device free-color list of the particular agent device to determine whether to use a BSS-color-reuse technique;
when the device determines that a first BSS color is available in the per-device free-color list of the particular agent device but the first BSS color is not in the universal free-color list, utilizing the device to compare an RSSI, received signal strength indication, of a beacon of the particular agent device with a preset color-reuse threshold; and
when the RSSI of the beacon of the particular agent device is lower than the preset color-reuse threshold, utilizing the device to reuse the first BSS color as the particular BSS color to be assigned to the particular agent device.

14. A device (102), comprising:
at least one antenna (1025); and
a processor (1022), configured to establish a wireless connection with at least one agent device through the at least one antenna (1025), wherein the device and the at least one agent device form a mesh network;
wherein in response to a basic-service-set-color, BSS-color, collision between a particular agent device and an access point which is not a part of the mesh network being detected, the processor assigns a particular BSS color to the particular agent device.

15. The device (102) as claimed in claim 14, wherein:
when there is at least one available BSS color in a universal free-color list of the BSS-color database, the device selects, using a predetermined BSS-color selection algorithm, one of the available BSS colors in the universal free-color list as the particular BSS color to be assigned to the particular agent device,
when there are no available BSS colors in the universal free-color list, the device checks a per-device free-color list of the particular agent device to determine whether to use a BSS-color-reuse technique,
wherein when the device determines that a first BSS color is available in the per-device free-color list of the particular agent device but it is not in the universal free-color list, the device compares an RSSI, received signal strength indication, of a beacon of the particular agent device with a preset color-reuse threshold, and
when the RSSI of the beacon of the particular agent device is lower than the preset color-reuse threshold, the device uses the first BSS color as the particular BSS color to be assigned to the particular agent device.
